(19) Europäisches Patentamt European Patent Office Office européen des brevets

(11) **EP 4 782 144 A1**

(12) **EUROPEAN PATENT APPLICATION**

(43) Date of publication:
**29.07.2026 Bulletin 2026/31**

(21) Application number: **26153873.0**

(22) Date of filing: **23.01.2026**

(51) International Patent Classification (IPC):
**B23P 6/00** $^{(2006.01)}$     **B23K 26/382** $^{(2014.01)}$
**F01D 5/00** $^{(2006.01)}$     **F01D 5/18** $^{(2006.01)}$
**F23R 3/00** $^{(2006.01)}$     **B23K 26/04** $^{(2014.01)}$

(52) Cooperative Patent Classification (CPC):
**B23P 6/002; B23K 26/382; B23K 26/389;**
**F01D 5/005; F01D 5/186; F01D 5/187; F01D 5/288;**
**F01D 9/023; F01D 9/041; F01D 9/065;**
**F01D 25/285; F23R 3/002;** B23K 26/04;
B23K 2101/001; B23P 2700/06

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH LA MA MD TN**

(30) Priority: **24.01.2025 US 202519036744**

(71) Applicant: **RTX Corporation**
**Farmington, CT 06032 (US)**

(72) Inventor: **COLLINS, Leah M.**
**Essex, 06426 (US)**

(74) Representative: **Dehns**
**10 Old Bailey**
**London EC4M 7NG (GB)**

(54) **TARGETED LOCATION CORRECTION OF THERMAL BARRIER COATED DIFFUSERS**

(57) A method for forming a cooling hole diffuser in a component (10) includes forming a cooling passage precursor (53) through the component (10), the cooling passage precursor (53) having a meter center; applying a coating (54) to the component (10) including portions (58) of the cooling passage precursor (53) to create an at least partially coated cooling passage having a meter remnant center that is offset relative to the meter center; and removing material from the at least partially coated cooling passage to form a finished cooling passage, wherein the step of removing material is guided optically based upon the meter remnant center and a correction from the meter remnant center to the meter center.

*FIG. 6*

## Description

### FIELD

The present disclosure relates to a method for properly positioning cooling hole diffusers in components such as gas turbine engine components which are also protected with thermal barrier coatings or other types of coatings.

### BACKGROUND

Gas turbine engine components, such as rotor blades and vanes, are used in environments having temperatures approaching or exceeding the allowable temperature limits of the materials used in those components. Cooling fluid flows through and over the external surfaces of the components to avoid overheating of the components and its inherent structural degradation. In a typical application, cooling air flows through the blade or vane and is then ejected through cooling passages extending through to the external surface.

To optimize the effectiveness of the cooling, the cooling passages are angled and shaped to produce a film of cooling fluid over the external surface of the component. These passages include a metering section and a diffuser section. The metering section controls the amount of cooling fluid flowing through the passage. The diffuser section reduces the velocity of the ejected fluid to encourage the fluid to form a boundary layer of cooling fluid downstream of the passage. In addition, the diffuser section maximizes the amount of external surface area covered by the film of cooling fluid.

Forming shaped cooling passages in materials such as those used in gas turbine engines presents difficulties. One popular method is to form the passages by electric-discharge machining (EDM). EDM provides an easy method to form the complex shape of the diffuser portion while also providing the accuracy required for the metering section. The EDM process involves material removal from the work piece by a series of rapidly recurring current discharges between two electrodes, separated by a dielectric liquid and subject to an electric voltage. One of the electrodes is called the tool-electrode, or simply the "tool" or "electrode", while the other is called the workpiece-electrode, or "work piece".

It is frequently necessary to protect the components generally and also the cooling passages with one or more thermal barrier or other coatings. When these coatings are applied, there is frequently an uneven coat down effect in the diffuser such that during subsequent completion of the cooling passage, the final steps of forming the cooling passage can be improperly positioned, or mismatched, with respect to the original and intended center of the cooling passage.

This mismatching of the diffusers can cause negative impact to the thermal effectiveness of cooling of the component thereby reducing component life within the gas turbine engine.

### SUMMARY OF THE DISCLOSURE

In one aspect, there is provided a method for forming a cooling hole diffuser in a component that comprises: forming a cooling passage precursor through the component, the cooling passage precursor having a meter center; applying a coating to the component including portions of the cooling passage precursor to create an at least partially coated cooling passage having a meter remnant center that is offset relative to the meter center; and removing material from the at least partially coated cooling passage to form a finished cooling passage, wherein the step of removing material is guided optically based upon the meter remnant center and a correction from the meter remnant center to the meter center.

In a non-limiting configuration, the correction is based upon measured radius of the meter remnant center, known radius of the meter center, and an engineering definition of the finished cooling passage.

In another non-limiting configuration, the correction (x,y) from the meter remnant center is determined as follows:

$$c = R'' - R';$$

$$x = c \cdot \cos A;$$

$$y = c \cdot \sin A,$$

wherein

R" is radius of the meter center,
R' is radius of the meter remnant center,
A is camera angle, and
x, y are coordinates of the correction.

In still another non-limiting configuration, the finished cooling passage has a metering section and a diffuser section.

In a further non-limiting configuration, the component is a metallic material and the coating is a ceramic material, and wherein the removing step removes portions of the ceramic material.

In a still further non-limiting configuration, the removing step also removes portions of the metallic material.

In another non-limiting configuration, the removing step is optically guided by a camera.

In still another non-limiting configuration, the camera is angled at the cooling passage precursor along an axis of the cooling passage precursor.

In a further non-limiting configuration, the camera locates the meter remnant center and meter remnant radius.

In a still further non-limiting configuration, the cooling passage precursor is formed relative to a surface of the component at an angle between an axis of the cooling passage precursor and the surface of between about 10 degrees and about 80 degrees.

In another non-limiting configuration, the angle of the cooling passage precursor defines a coincident edge of the meter remnant center that is coincident with an edge of the meter center.

In still another non-limiting configuration, the coincident edge is located optically and the correction is based upon location of the coincident edge.

In a further non-limiting configuration, the removing comprises laser ablation of the material.

In a still further non-limiting configuration, the component is a rotor blade or vane of a gas turbine engine.

In another non-limiting configuration, the coating comprises a thermal barrier coating.

In still another non-limiting configuration, the method further comprises, after the applying step, an opening step wherein a portion of the coating is removed, followed by the removing step.

In a further non-limiting configuration, the cooling passage precursor is formed relative to a surface of the component at an angle between an axis of the cooling passage precursor and the surface, wherein the angle of the cooling passage precursor defines a coincident edge of the meter remnant center that is coincident with an edge of the meter center, and wherein the portion of the coating is removed from an edge of the meter remnant that is opposite from the coincident edge.

In a still further non-limiting configuration, the removing step is guided optically by a camera system, and further comprising, before the removing step, correcting relative position of the component relative to the camera system.

In another non-limiting configuration, the correcting relative position comprises aligning a focal axis of the camera system with an axis of the cooling passage precursor.

In still another non-limiting configuration, the component has a plurality of cooling passage precursors, and further comprising correcting relative position of the component relative to the camera system for each cooling passage precursor of the plurality of cooling passage precursors.

The foregoing features and elements may be combined in various combinations without exclusivity, unless expressly indicated otherwise. These features and elements, as well as the operation thereof, will become more apparent in light of the following description and the accompanying drawings. It should be appreciated that the following description and drawings are intended to be exemplary in nature and non-limiting.

## BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.

FIG. 1 is a perspective view of a gas turbine engine rotor blade having an airfoil portion with shaped cooling passages and a platform with shaped cooling passages;
FIG. 2 is a sectioned view of the rotor blade taken along line 2-2 of Fig. 1, showing the passage axis for each cooling passage;
FIG. 3 is a further sectional view of the rotor blade showing the alignment of the cooling passages in the platform portion;
FIG. 4 is a schematic representation of an exemplary cooling passage;
FIG. 5 illustrates a rough or precursor cut of a cooling passage in a component;
FIG. 6 illustrates a coating step of a precursor cooling passage; FIG. 7 illustrates misalignment of a meter remnant with the intended cooling passage;
FIG. 8 illustrates a gun barrel view along a camera axis further illustrating the misalignment of the axis of the meter remnant as compared to the intended cooling passage;
FIG. 9 illustrates a resulting misalignment of a finished cooling passage if no correction for misalignment is made;
FIG. 10 illustrates a first step of finishing a precursor cooling passage after correction to the intended cooling passage axis;
FIG. 11 illustrates a second or final step of finishing a precursor cooling passage to the final cooling passage as desired;
FIG. 12 illustrates utilization of a correction in accordance with one disclosed embodiment;
FIG. 13 illustrates an engineering definition in gun barrel view of a meter hole and diffuser;
FIG. 14 illustrates the engineering definition in a camera angle or machine camera position; and
FIG. 15 illustrates an alignment step which can be useful at several steps in the disclosed method.

## DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical, chemical, and mechanical changes may be made without departing from the scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option. Further, any steps in a method discussed herein may be performed in any suitable order or combination. Additionally, any reference to without contact (or similar phrases) may also include reduced contact or minimal contact. It should also be understood that unless specifically stated otherwise, references to "a", "an", or "the" may include one or more than one and that reference to an item in the singular may also include the item in the plural. Further, all ranges may include upper and lower values and all ranges and ratio limits disclosed herein may be combined.

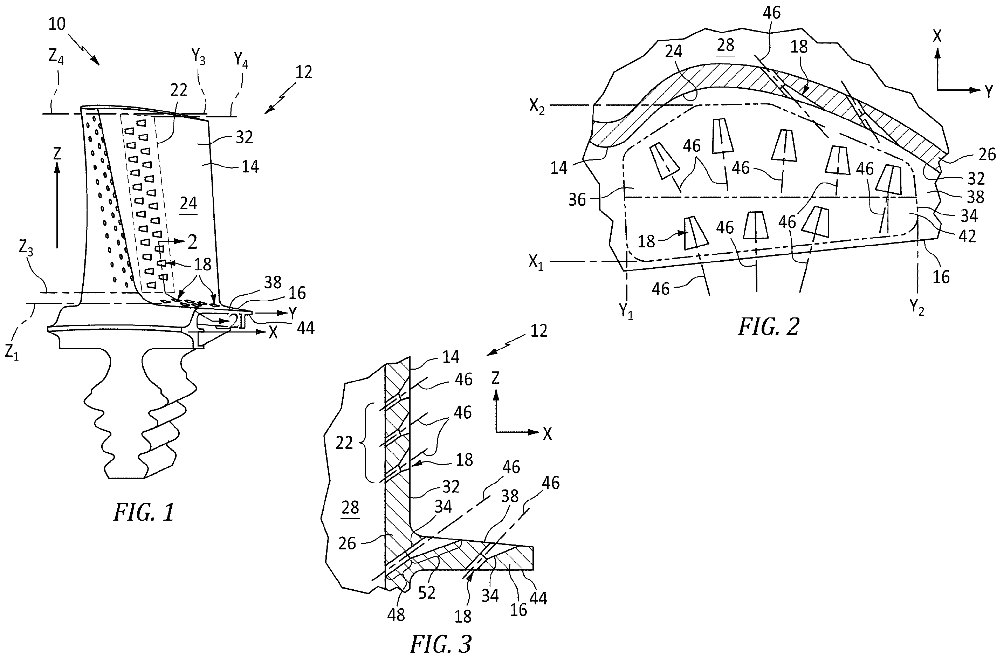

FIG. 1 illustrates an article 10 having shaped passages. As shown in FIG. 1, article 10 can, in one non-limiting example, be a gas turbine engine rotor blade or a vane 12 having an airfoil 14, a platform 16, and multiple shaped cooling passages 18 in various locations on the article.

The airfoil 14 includes a plurality or array 22 of shaped cooling passages 18 disposed along the pressure side 24 of the airfoil 14. As shown in FIG. 2, the plurality of cooling passages 18 extend through the wall 26 of the airfoil 14 and provide flow communication between the hollow core 28 of the airfoil 14 and the external surface 32 of the airfoil 14. Cooling fluid exiting the plurality of cooling passages 18 forms a film or buffer of cooling fluid flowing over the external surface 32 downstream of the plurality of cooling passages 18. This film of cooling fluid insulates the external surface 32 of the airfoil 14 from the hot gases flowing through the gas turbine engine.

Referring also to FIG. 3, the platform 16 can include another plurality 34 of cooling passages 18 extending through the platform 16. As shown in FIG. 2, a first group 36 of the cooling passages 18 are adjacent to the airfoil 14. Referring also to FIG. 3, this group 36 of cooling passages can extend from the hollow core 28 to the flow surface 38 of the platform 16 to provide flow communication between the core 28 and the flow surface 38 of the platform 16. A second group 42 of cooling passages 18 are spaced laterally from the airfoil 14 (FIG. 2). This group 42 of cooling passages can extend through the platform 16 to provide flow communication between the underside 44 of the platform 16 and the flow surface 38 of the platform 16. The two groups of cooling passages 36, 42 in conjunction generate a film of cooling fluid flowing over the flow surface 38 of the platform 16.

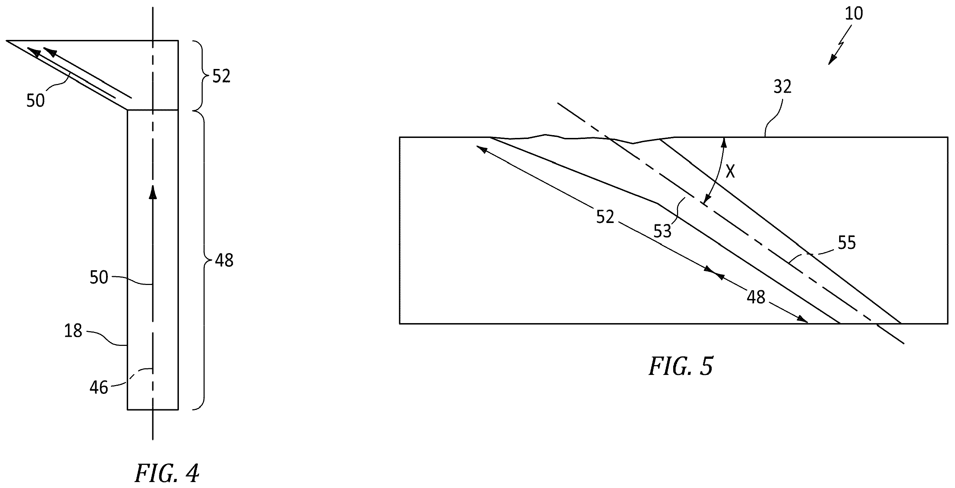

FIG. 4 illustrates in an enlarged view of a non-limiting configuration of a cooling passage 18. Cooling passage 18 can be disposed about a passage axis 46 and include a meter section 48 and a diffuser section 52. The meter section 48 is centered on the passage axis 46 and can be of constant diameter. The meter section 48 controls the amount of cooling fluid 50 flowing through the cooling passage 18. The diffuser section 52 expands outwardly such that the velocity of the cooling fluid flowing through the metering section 48 decreases and the body of fluid spreads over a greater area. The shape of each particular cooling passage 18 can be tailored to meet the particular cooling requirement, for example in that location of the component being cooled. In an exemplary embodiment the cooling passage 18 can be canted at a particular angle relative to the flow surface over which it is directing cooling fluid. The specific orientation of each of the cooling passages 18, whether in the airfoil 14 or the platform 16, contributes to the capabilities of the cooling passages 18 to generate the necessary film of cooling fluid over the flow surfaces of the blade 12.

FIG. 5 shows a portion of a component or article 10 having a surface 32 through which a cooling passage is to be formed. Cooling passages can be formed using any known technique including laser drilling, electrode discharge machining, mechanical machining or drilling and the like. This initial step can be used to form a rough cut or cooling passage precursor 53. This cooling passage precursor 53 can have a center or central axis 55 and an orientation as desired for the eventual finished cooling passage. Cooling passage precursor 53 can have a metering section 48 and diffuser section 52 as shown.

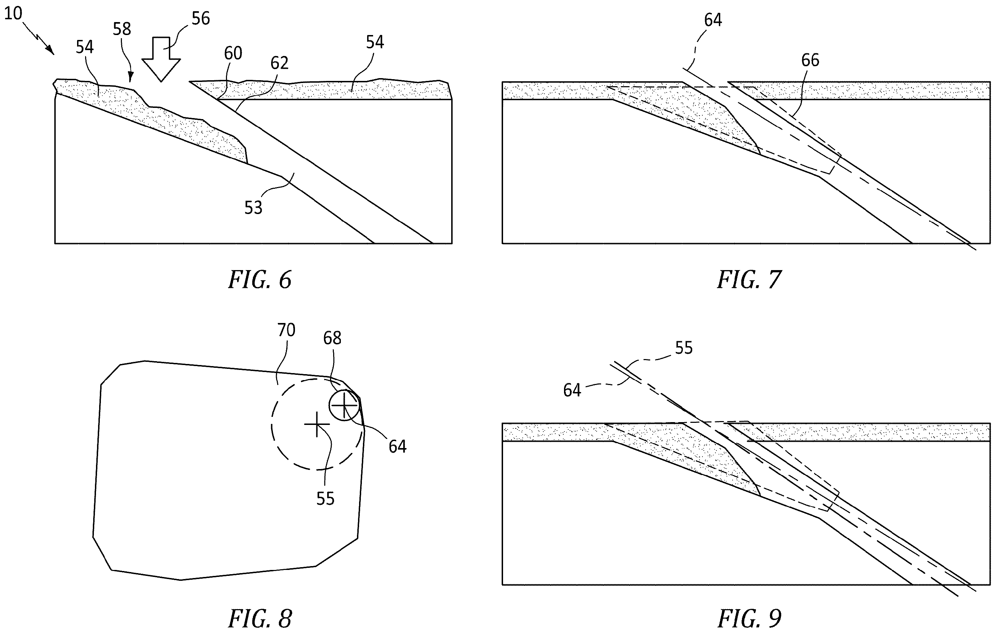

Following the formation of cooling passage precursor 53, one or more coatings 54 can be applied to the component 10 (FIG. 6). The coating process can be any known coating process including chemical vapor deposition, slurry coating and the like, and the process is schematically illustrated at 56. The coating applied can be any suitable coating material depending upon the component in question, and non-limiting examples of coatings include thermal barrier coatings (TBC), environmental barrier coatings (EBC), bond coats and others. In one non-limiting configuration, the coating is a ceramic thermal barrier coating.

As shown, coating 54 at this stage partially covers cooling passage precursor 53, notably in an area of the diffuser section 52. It is noted that cooling passages are typically angled or canted relative to surface 32 (FIG. 5) of component 10 as mentioned above. This angling is shown at angle X in FIG. 5 between an axis 55 of cooling passage precursor 53 and surface 32. Angle X in this non-limiting configuration can suitably be between 10 and 80 degrees. Due to this angling and the widening of the diffuser section 52, some portions 58 of the opening of the cooling passage precursor 53 will accumulate more coating than others. Further, at the acute angled portion of the opening into surface 32, an edge 62 (FIG. 6) of the coated cooling passage precursor 53 will be substantially coincident with an edge 60 of the cooling passage precursor 53 prior to coating. This uneven coating of one side of the diffuser and portions of the meter as well leads to a visible portion or remnant of the coated precursor 53 that may have a visible center that is not coincident with the original intended center of the meter. This can lead to complications in a cooling hole finishing step, especially when the finishing step is guided by camera that focuses on what it sees as the center of the meter as discussed above, wherein finishing steps based upon a center that is not the center of the intended meter hole will result in a diffuser portion that is not properly aligned. This is illustrated in FIGS. 6, 7 and 9 discussed further below.

At this stage, it is desired to remove excess coating from the cooling passage precursor 53 to form the final or finished cooling passage. However, if this step is conducted based upon the opening of the coated cooling passage precursor which may be along axis 64 (FIG. 7), then the finished diffuser shape will be out of position from the desired position and also with the metering section, see dashed outline 66 in FIG. 7, and this can lead to poor functioning of the cooling passage and resultant poor lifespan of the part or component. For example, if the finishing of the cooling passage is to be guided optically, for example with a camera or similar optics, centering the finishing activity (i.e. removal of material) on a central axis 64 of a metering hole remnant, that is, the remaining open area of the metering opening of the cooling passage, the area of material to be removed, schematically marked at 66, will not be centered on the original intended axis 55 (FIG. 5) with the result that too much material can be removed from one side of the passage and too little removed from the other, and the cooling passage will not have the intended structure. This can lead to improper functioning of the cooling passage and potential premature part failure. FIG. 9 further illustrates the misalignment of original intended central axis 55 and axis 64 of the meter remnant. As can be seen, visible axis 64 of the metering hole remnant can be laterally spaced and/or somewhat rotated or skewed relative to intended center 55.

FIG. 8 further illustrates this subject matter from a gun barrel view which would be seen by optics such as a camera or the like when aligned along axis 55 of the metering hole. FIG. 8 shows meter remnant 68 with visible center 64 and the original intended meter opening 70 with intended center 55. The center points of these two features correspond to meter remnant axis 64 and intended axis 55. In accordance with this disclosure, a correction is made to estimate the central axis from point 64 back to or toward intended axis 55.

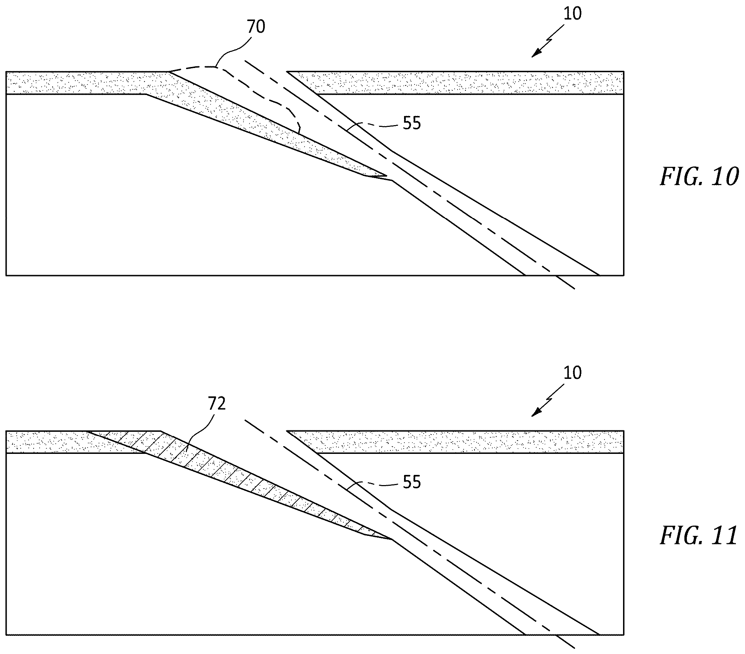

Once the intended axis 55 is corrected to, the coated cooling passage precursor for example as shown in FIG. 9 can be finished by removing excess coating material, but from the correct locations centered on axis 55 rather than axis 64, and in some instances portions of the underlying component can also be removed, to form the final cooling passage. This removal can be done in a single step, or in multiple steps if desired. For example, FIG. 10 shows a first removal step wherein a first portion 70 of excess coating is removed in a first process which can be a laser process, for example. In order to obtain the proper angling of the diffuser section 52, it may be desired to then remove a further portion of the coating in the diffuser portion to result in the intended final structure, which could be as illustrated in FIG. 11. In this step, for example, remaining excess material 72 (cross-hatched in FIG. 11) can be removed to reach the intended dimensions of the final cooling passage.

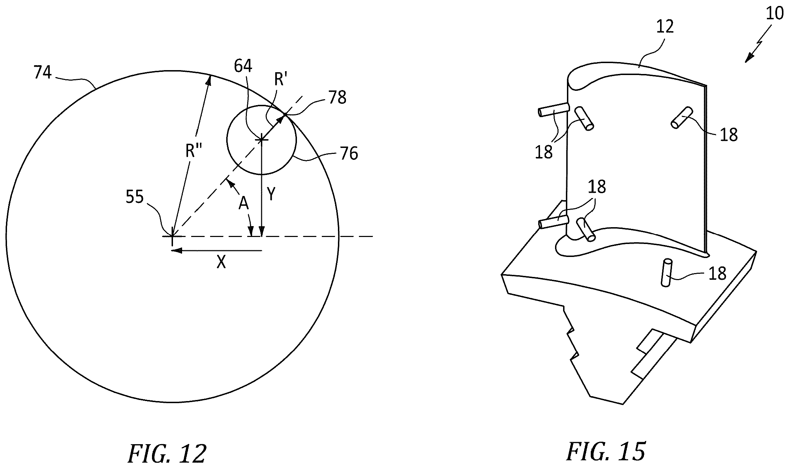

In one disclosed embodiment, correction from the center of the meter remnant to the intended meter center can be accomplished as follows. FIG. 12 schematically illustrates intended meter opening 74, a central axis 55 of meter opening 74, and the radius R" of meter opening 74. FIG. 12 also illustrates meter remnant opening 76, remnant axis 64, and radius R' of meter remnant opening 76. In this regard, central axis 55 and meter opening 74 can be measured values or can be taken from the engineering definition of the part. Remnant axis 64 and related features are determined using the camera. Correction (c) from axis 64 to axis 55 can be done as follows wherein the correction (x,y) from the meter remnant center is determined as follows:

$$c = R'' - R';$$

$$x = c \cdot cosA;$$

$$y = c \cdot sinA,$$

wherein

R" is radius of the meter center,
R' is radius of the meter remnant center,
A is the camera angle which is determined as discussed below, and
x,y are coordinates of the correction.

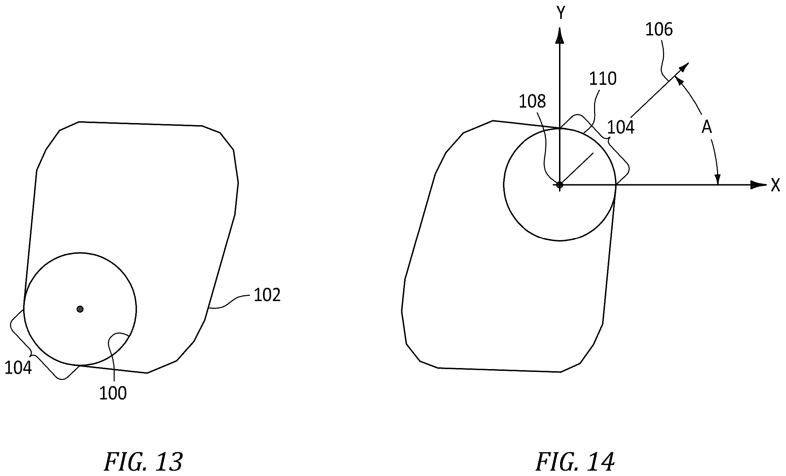

Camera angle A is a value that is determined by interrogation of the engineering definition, or model, of the cooling hole meter and diffuser. This is used to determine where the meter is coincident with the diffuser. This will likely be in the form of a segment of a circle where the wall of the meter extends straight through the diffuser portion. FIG. 13 illustrates a gun barrel view of a possible engineering definition showing meter circumference 100 and showing a circumference or outline 102 of the diffuser opening. There is a portion of meter circumference 100 that is coincident with diffuser circumference 102, and this portion is typically a segment 104 of circumference 100. The engineering definition view of FIG. 13 is then rotated or oriented to machine coordinates as shown in FIG. 14. This can be done using the J angle of the machine definition, which specifies to what point the image is rotated to reach camera angle. The J angle is part of the engineering definition of the part, and is relates the orientation of the diffuser back to the engine radial reference in gunbarrel view. The machine camera angle is the orientation of the mid-point of the coincident edge related back to the machine coordinate system. At this position, angle A mentioned above corresponds to the angle between a line 106 drawn from a center 108 of meter circumference 100 through a midpoint 110 of segment 104, and the x coordinate of the machine direction. The image of FIG. 14 corresponds to a J angle of 0, which generally results in an angle A of 45 degrees. Of course, with other machine definitions with different J angles, angle A can be an angle of numerous other sizes. Thus, the camera angle A is a nominal value that is derived from the engineering definition of the cooling hole in the machine position. This angle is used to make the correction as set forth above to determine movement in x and y coordinates to estimate the position in the coated part of the actual center of the meter.

With this correction, optics such as a camera and the like for guiding the finishing process can be adjusted to the corrected center/axis 55 and steps such as those illustrated in FIGS. 10 and 11 to finish the desired cooling hole structure can then be carried out to produce the desired cooling passage properly aligned with the original intended configuration.

Angle A can be used along with measured values R' and R" to determine coordinates of the correction to use to estimate the actual center of the coated cooling passage as outlined above. Then, these coordinates can be used as shown in FIG. 12. Starting at center point 64 of the meter remnant, the correction can be made using the x and y values to estimate the center 55' of the intended meter hole, and this center can then be the center point for the finishing steps of machining the cooling hole.

Thus, FIG. 12 shows meter remnant 76 and intended meter 74, again oriented to the position of angle A from the x-axis. The values of x and y determined as set forth above can then be used to locate estimated center 55' as set forth above, and estimated center 55' can be used as the center point of the final cooling passage formation step.

FIG. 15 schematically illustrates an article 10, in this case a vane 12, with several intended locations of cooling passages 18 illustrated. These are illustrated not only as positions, but also the vector or direction of extent of the cooling passage through a wall of the article 10. In this regard, it is desired to be able to adjust position of article 10 relative to optics such as a camera and also laser or other equipment used to form the cooling passage precursor as well as the finished cooling passage. Adjusting the relative position of article 10, or the pose of article 10, allows proper aligning for forming both the precursor cooling passages as well as finished cooling passages with the desired orientation and intended structure with diffuser section aligned with metering section as desired. Thus, in this configuration the method further comprises correcting relative position and orientation of the component relative to the camera system for each cooling passage precursor of the plurality of cooling passage precursors.

It should be appreciated that while the present disclosure is made in terms of finishing the cooling passage including meter and diffusion zone to the original engineering definition, in some instances it may be desirable to modify the original engineering definition or model to create the finished feature. The laser machining tool path follows the engineering definition to create the diffuser shape, and so modifying the original definition can provide significant quality and cycle-time advantages while continuing to maintain the finished feature size. This would be a technique that would still be applied after the positional correction to finish the diffuser.

Further, the original step of applying the coating that partially masks the actual position of the center of the meter is done on a starting cooling passage that can be a simple meter hole without any diffuser at this stage, or a meter hole with a partially formed diffuser, and in either of these cases, the final step can be based upon the correction factor as discussed above, and used to finish the diffuser portion as needed. Thus, the last machining or feature installation step can remove coating or component material or both, and can be done with a variety of different processes.

Summarizing the salient points of the method, a component having cooling passages at least in the form of the intended metering hole portion is coated, for example with a thermal barrier coating. Because the cooling passages are angled relative to a surface of the component, the coating is deposited unevenly with respect to the opening and adjoining areas of the cooling passage, such that the visible meter remnant is off-center from the intended cooling passage.

Using measured radius of the meter remnant, known or measured radius of the intended metering hole of the cooling passage, and a correction factor determined from the machine definition of the component, a correction vector and direction are determined which lead from the center of the meter remnant back toward the intended center of the meter of the cooling passage. One or more finishing stage can then be carried out to finish the shape and contour of the cooling passage including diffuser portion, and these stage(s) are guided optically along an axis through the corrected center to help ensure that the diffuser of the final cooling passage is properly aligned and positioned with respect to the metering portion of the cooling passage.

The foregoing description is exemplary of the subject matter of the subject matter disclosed herein. Various non-limiting embodiments are disclosed, however, one of ordinary skill in the art would recognize that various modifications and variations in light of the above teachings will fall within the scope of the appended claims. It is therefore to be appreciated that within the scope of the appended claims, the disclosure may be practiced other than as specifically described. Thus, the scope of the present claims is not specifically limited by the details of specific embodiment disclosed herein, but rather the claims define the full and reasonable scope of the disclosure.

## Claims

1. A method for forming a cooling hole diffuser in a component (10; 12), comprising:

   forming a cooling passage precursor (53) through the component (10; 12), the cooling passage precursor (53) having a meter center (55);
   applying a coating (54) to the component (10; 12) including portions (58) of the cooling passage precursor (53) to create an at least partially coated cooling passage having a meter remnant center (64) that is offset relative to the meter center (55); and
   removing material (66) from the at least partially coated cooling passage to form a finished cooling passage (18), wherein the step of removing material (66) is guided optically based upon the meter remnant center (64) and a correction from the meter remnant center (64) to the meter center (55).

2. The method of claim 1, wherein the correction is based upon measured radius (R') of the meter remnant center (64), known radius (R") of the meter center (55), and an engineering definition of the finished cooling passage (18).

3. The method of claim 2, wherein the correction (x,y) from the meter remnant center (64) is determined as follows:

$$c = R'' - R';$$

$$x = c \cdot \cos A;$$

$$y = c \cdot \sin A,$$

   wherein

   R" is radius of the meter center (55),
   R' is radius of the meter remnant center (64),
   A is camera angle, and
   x,y are coordinates of the correction.

4. The method of any preceding claim, wherein the finished cooling passage (18) has a metering section (48) and a diffuser section (52).

5. The method of any preceding claim, wherein the component (10; 12) is a metallic material and the coating (54) is a ceramic material, and wherein the removing step removes portions (70) of the ceramic material, optionally wherein the removing step also removes portions of the metallic material.

6. The method of any preceding claim, wherein the removing step is optically guided by a camera, optionally wherein the camera is angled at the cooling passage precursor (53) along an axis (55) of the cooling passage precursor (53).

7. The method of claim 6, wherein the camera locates the meter remnant center (64) and meter remnant radius (R').

8. The method of any preceding claim, wherein the cooling passage precursor (53) is formed relative to a surface (32) of the component (10; 12) at an angle (X) between an or the axis (55) of the cooling passage precursor (53) and the surface (32) of between about 10 degrees and about 80 degrees.

9. The method of claim 8, wherein the angle (X) of the cooling passage precursor (53) defines a coincident edge (62) of the meter remnant center (64) that is coincident with an edge (60) of the meter center (55), optionally wherein the coincident edge (62) is located optically and the correction is based upon location of the coincident edge (62).

10. The method of any preceding claim, wherein the removing comprises laser ablation of the material (66).

11. The method of any preceding claim, wherein the component (10; 12) is a rotor blade or vane (10; 12) of a gas turbine engine.

12. The method of any preceding claim, wherein the coating (54) comprises a thermal barrier coating (54).

13. The method of any preceding claim, further comprising, after the applying step, an opening step wherein a portion (70) of the coating (54) is removed, followed by the removing step, optionally wherein the cooling passage precursor (53) is formed relative to a or the surface (32) of the component (10; 12) at an angle (X) between an axis (55) of the cooling passage precursor (53) and the surface (32), wherein the angle (X) of the cooling passage precursor (53) defines a or the coincident edge (62) of the meter remnant center (64) that is coincident with an edge (60) of the meter center (55), and wherein the portion (70) of the coating (54) is removed from an edge of the meter remnant (76) that is opposite from the coincident edge (62).

14. The method of any preceding claim, wherein the removing step is guided optically by a camera system, and further comprising, before the removing step, correcting relative position of the component (10; 12) relative to the camera system.

15. The method of claim 14, wherein the correcting relative position comprises aligning a focal axis of the camera system with an axis (55) of the cooling passage precursor (53), optionally wherein the component (10; 12) has a plurality of cooling passage precursors (53), and further comprising correcting relative position of the component (10; 12) relative to the camera system for each cooling passage precursor (53) of the plurality of cooling passage precursors (53).

**FIG. 1**

**FIG. 2**

**FIG. 3**

EP 4 782 144 A1

*FIG. 5*

*FIG. 4*

FIG. 6

FIG. 7

FIG. 8

FIG. 9

*FIG. 10*

*FIG. 11*

*FIG. 15*

*FIG. 12*

*FIG. 13*

*FIG. 14*

| | Europäisches Patentamt European Patent Office Office européen des brevets | **EUROPEAN SEARCH REPORT** | **Application Number** EP 26 15 3873 |

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 2 952 709 B1 (MITSUBISHI HITACHI POWER SYS [JP]) 28 August 2019 (2019-08-28) * paragraphs [0050], [0062], [0074] - [0075]; figure 8 * ----- | 1-15 | INV. B23P6/00 B23K26/382 F01D5/00 F01D5/18 F23R3/00 ADD. B23K26/04 |
| Y | US 8 414 264 B2 (BOLMS HANS-THOMAS [DE]; IRMISCH STEFAN [CH] ET AL.) 9 April 2013 (2013-04-09) * see column 7 , line 28 - 33; claim 1; figures 1-5 * ----- | 1-15 | |
| A | US 7 725 210 B2 (ALSTOM TECHNOLOGY LTD [CH]) 25 May 2010 (2010-05-25) * claim 1 * ----- | 1-15 | |
| A | US 6 380 512 B1 (EMER GEORGE [US]) 30 April 2002 (2002-04-30) * claim 1; figure 1 * ----- | 1-15 | |

| | | | TECHNICAL FIELDS SEARCHED (IPC) |
|---|---|---|---|
| | | | B23P B23K F01D |

The present search report has been drawn up for all claims

| Place of search | Date of completion of the search | Examiner |
|---|---|---|
| The Hague | 20 May 2026 | Habermann, Philippe |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 26 15 3873

This annex lists the patent family members relating to the patent documents cited in the above-mentioned European search report.
The members are as contained in the European Patent Office EDP file on
The European Patent Office is in no way liable for these particulars which are merely given for the purpose of information.

20-05-2026

| Patent document cited in search report | | | Publication date | Patent family member(s) | | Publication date |
|---|---|---|---|---|---|---|
| EP 2952709 | B1 | | 28-08-2019 | CN | 104968916 A | 07-10-2015 |
| | | | | EP | 2952709 A1 | 09-12-2015 |
| | | | | JP | 5456192 B1 | 26-03-2014 |
| | | | | JP | 2014163330 A | 08-09-2014 |
| | | | | KR | 20150100854 A | 02-09-2015 |
| | | | | US | 2015354371 A1 | 10-12-2015 |
| | | | | US | 2018156040 A1 | 07-06-2018 |
| | | | | WO | 2014132797 A1 | 04-09-2014 |
| US 8414264 | B2 | | 09-04-2013 | EP | 1767743 A1 | 28-03-2007 |
| | | | | EP | 1929126 A1 | 11-06-2008 |
| | | | | EP | 2602433 A1 | 12-06-2013 |
| | | | | JP | 4980360 B2 | 18-07-2012 |
| | | | | JP | 2009510302 A | 12-03-2009 |
| | | | | US | 2009220349 A1 | 03-09-2009 |
| | | | | WO | 2007036437 A1 | 05-04-2007 |
| US 7725210 | B2 | | 25-05-2010 | EP | 1844892 A1 | 17-10-2007 |
| | | | | EP | 1844893 A1 | 17-10-2007 |
| | | | | US | 2007241084 A1 | 18-10-2007 |
| US 6380512 | B1 | | 30-04-2002 | CA | 2462846 A1 | 17-04-2003 |
| | | | | CN | 1602236 A | 30-03-2005 |
| | | | | EP | 1441874 A1 | 04-08-2004 |
| | | | | JP | 2005524533 A | 18-08-2005 |
| | | | | US | 6380512 B1 | 30-04-2002 |
| | | | | WO | 03031107 A1 | 17-04-2003 |

EPO FORM P0459

For more details about this annex : see Official Journal of the European Patent Office, No. 12/82